# EUROPÄISCHE PATENTSCHRIFT

(11) **EP 1 788 468 B1**
(45) Veröffentlichungstag und Bekanntmachung des Hinweises auf die Patenterteilung: **15.05.2013**
(21) Anmeldenummer: 06123011.6
(22) Anmeldetag: 26.10.2006
(51) Int. Cl.: G05D 1/02, B60R 1/00, H04N 7/18

(54) **Einrichtung zur Warnung des Fahrers eines Kraftfahrzeugs**
System for warning the driver of a motor vehicle
Système pour prevenir le concucteur d'un véhicule automobile

(30) Priorität: 21.11.2005 DE 102005055348
(43) Veröffentlichungstag der Anmeldung: 23.05.2007
(73) Patentinhaber: ROBERT BOSCH GMBH, 70442 Stuttgart (DE)
(72) Erfinder: Niehsen, Wolfgang, 31162 Bad Salzdetfurth (DE)

(56) Entgegenhaltungen:
- EP-A2- 0 626 655
- EP-A2- 0 697 641
- US-A1- 2002 105 438
- US-A1- 2003 156 737
- US-A1- 2004 016 870
- US-B1- 6 590 521

## Beschreibung

Die Erfindung betrifft eine Einrichtung zur Warnung des Fahrers eines Kraftfahrzeugs vor Verlassen einer Fahrspur mit einer auf die Fahrspur gerichteten Videokamera zum Aufnehmen eines Bildes.

### Stand der Technik

Um den Fahrer eines Kraftfahrzeugs vor dem Verlassen einer Fahrspur zu warnen, sind Einrichtungen mit Videokameras und anschließender digitaler Signalverarbeitung bekannt geworden. Dabei erfordert die digitale Signalverarbeitung leistungsfähige Hardware-Plattformen mit hoher Rechenleistung, großem Speicherplatzbedarf und breitbandigen Bussystemen. Bei einer aus US 4,630,109 bekannt gewordenen früheren Einrichtung ist eine Videokamera mit einem analogen Ausgang und einem Analog/Digital-Wandler vorgesehen. Die weitere Verarbeitung erfolgt zwar nicht mit einem Rechnersystem, ist jedoch mit einem erheblichen Aufwand an Digital-Schaltungen, insbesondere Speichern, verbunden.

US 2004/0016870 betrifft ein digitales Bilderfassungssystem für Kraftfahrzeuge zum Erfassen einer Fahrzeugumgebung. Das Bilderfassungssystem weist einen Bildsensor und eine Steuerung auf. Es wird vorgeschlagen eine Kantendetektion auf Bilder des Bilderfassungssystem anzuwenden, um die Datenmenge zu reduzieren.

US 6 590 521 betrifft ebenfalls ein digitales Bilderfassungssystem für Kraftfahrzeuge zum Erfassen einer Fahrzeugumgebung. Zur Detektion von Fahrbahnmarkierungen wird vorgeschlagen Pixeloperationen auf digitale Bilder anzuwenden.

### Offenbarung der Erfindung

Aufgabe der vorliegenden Erfindung ist ein kostengünstige Realisierung einer Fahrspurverlassenswarnung im Kraftfahrzeug. Diese Aufgabe wird erfindungsgemäß dadurch gelöst, dass ein mit Hilfe der Videokamera erzeugtes analoges Videosignal einem Filter zuführbar ist und dass das Filter im Videosignal vorhandene Signalsprünge an eine Zähleinrichtung weiterleitet, welche die Lage der Signalsprünge innerhalb jeweils einer Zeile des Bildes ermittelt und bei Abweichungen der Lage der Signalsprünge von einem Sollbereich ein Warnsignal abgibt. Vorzugsweise umfasst das Filter einen Differenzierer und mindestens eine Schwellwertschaltung.

Die erfindungsgemäße Einrichtung hat den Vorteil einer drastischen Kostenminimierung durch Verzicht auf die zur digitalen Bildverarbeitung erforderlichen Hardware-Komponenten. Außerdem können einfache Hardware-Komponenten zur analogen Bildverarbeitung verwendet werden.

Zur Verringerung der Wirkung von Rauschanteilen im Videosignal kann bei der erfindungsgemäßen Einrichtung vorgesehen sein, dass Signalsprünge aus mehreren Zeilen des aufgenommenen Bildes berücksichtigt und die Zählergebnisse gemittelt werden.

Bei dem üblicherweise vorhandenen Bildeindruck, nämlich weißen Begrenzungslinien auf einem dunkleren Straßenbelag, sind in den Videosignalen je ein Signalsprung in Richtung Weiß und ein Signalsprung in Richtung Schwarz kurz nacheinander vorhanden. Damit nach dem Signalsprung in Richtung Weiß eine ausreichende Zeit zur Signalverarbeitung in der Zähleinrichtung bis zum Signalsprung in Richtung Schwarz verbleibt, kann gemäß einer vorteilhaften Ausgestaltung der Erfindung vorgesehen sein, dass Signalsprünge verschiedener Richtung aus benachbarten Zeilen abgeleitet werden. Diese Ausgestaltung ist besonders vorteilhaft bei einer anderen Ausgestaltung, die darin besteht, dass die Zähleinrichtung von einem Mikrocontroller gebildet ist.

Eine andere vorteilhafte Ausgestaltung besteht darin, dass mindestens ein Ausgang des Filters mit einem Interrupt-Eingang des Mikrocontrollers verbunden ist und dass ein Sync-Separator zur Ableitung von Synchronimpulsen mit dem Videosignal beaufschlagt ist und die Synchronimpulse dem Mikrocontroller zuführt. Hierbei kann eine Videokamera verwendet werden, die ein analoges Videosignal abgibt. Falls dieses nach dem Zwischenzeilenverfahren vorliegt, kann vorgesehen sein, dass der Sync-Separator ferner zur Erzeugung eines Halbbilder kennzeichnenden Signals ausgebildet ist, das dem Mikrocontroller zugeführt wird.

Eine weitere vorteilhafte Ausgestaltung der erfindungsgemäßen Einrichtung besteht darin, dass zwischen einem Ausgang der Videokamera für ein digitales Videosignal und dem Filter eine Schaltung zur Erzeugung des analogen Videosignals angeordnet ist und dass Synchronimpulse direkt aus der Videokamera zugeführt werden. Dadurch kann ein externer Sync-Separator entfallen, da die Synchronimpulse und gegebenenfalls das Signal zur Kennzeichnung der Halbbilder bei digitalen Videokameras direkt abgegriffen werden können.

Eine weitere Ersparnis bezüglich des Aufwandes ist dadurch erzielbar, dass die erfindungsgemäße Einrichtung Komponenten anderer Systeme mitbenutzt. Vorzugsweise ist dabei vorgesehen, dass die Videokamera eine Rückfahrkamera ist. Darüber hinaus kann bei der Verwendung einer Rückfahrkamera bei der erfindungsgemäßen Einrichtung eine Warnung vor Pfosten und anderen Hindernissen erfolgen, wozu gegebenenfalls auch Zeilen im mittleren Bildbereich herangezogen werden und die Ermittlung der Lage von Signalsprüngen an diesen Zweck angepasst wird.

Da die erfindungsgemäße Einrichtung nur wenig Rechenleistung erfordert, kann ein im Kraftfahrzeug vorhandener Mikrocontroller mitbenutzt werden, beispielsweise derjenige eines Mikrocomputers des Ultraschall-basierten Parkpiloten, da dieser nur während eines Einparkvorgangs, nicht jedoch während der Fahrt mit einer Geschwindigkeit von beispielsweise mindestens 30 km/h genutzt wird.

### Kurze Beschreibung der Zeichnung

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: ein von der Videokamera aufgenommenes Bild und
- Fig. 3: den Verlauf eines Videosignals während einer Zeile, den Verlauf eines differenzierten Videosignals während einer Zeile und aus dem differenzierten Videosignal abgeleitete Impulse, die als Interrupt-Signale einem Mikrocontroller zugeführt werden.

### Beschreibung des Ausführungsbeispiels

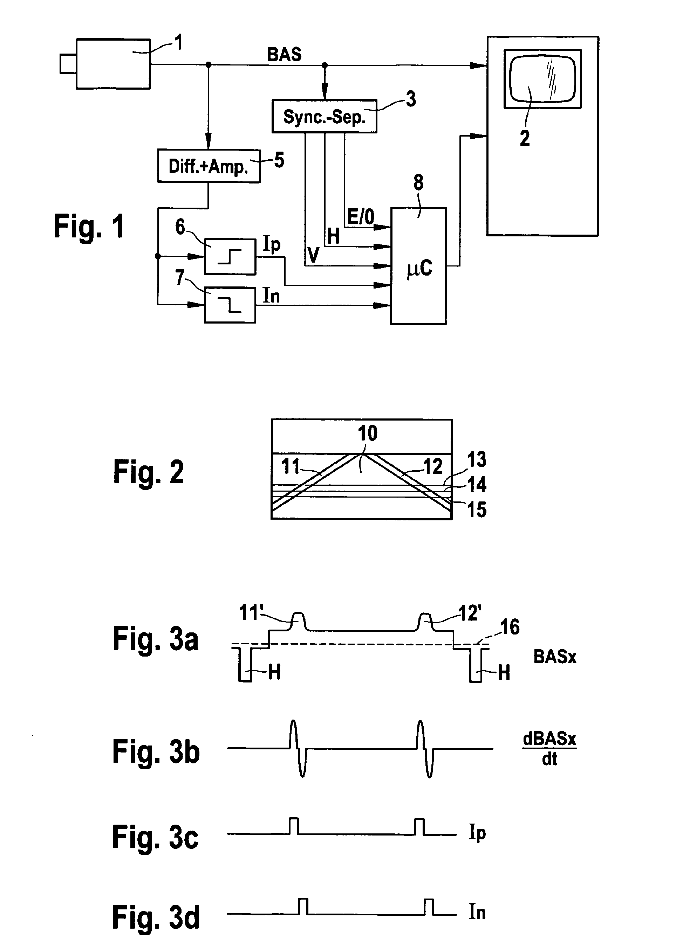

Die Einrichtung nach Fig. 1 weist eine Videokamera 1 auf, die ein analoges Videosignal BAS abgibt. Für die Zwecke der erfindungsgemäßen Einrichtung eignen sich sowohl monochrome Kameras als auch Farbkameras. Im Falle einer Farbkamera mit einem FBAS-Signal am Ausgang muss gegebenenfalls das Farbartsignal herausgefiltert werden. Das aufgenommene Bild kann in einem im Kraftfahrzeug vorhandenen Mensch-Maschine-Interface mit einem Bildschirm 2 wiedergegeben werden.

Aus dem BAS-Signal werden im Sync-Separator 3 horizontalfrequente und vertikalfrequente Synchronsignale H und V abgetrennt, gegebenenfalls auch ein Signal E/O zur Kennzeichnung der Halbbilder, falls die Videokamera 1 nach dem Zwischenzeilenverfahren arbeitet. Das BAS-Signal wird zu einem Differenzierer mit Verstärker 5 geleitet. Mit diesem werden Signalsprünge, also Helligkeitssprünge im Bild, festgestellt.

Damit nur solche Signalsprünge, die groß genug sind, wenn Fahrspurmarkierungen vorliegen, ausgewertet werden, folgt auf den Differenzierer 5 eine Schwellwertschaltung 6 für positive Spitzen (linke Ränder von weißen Fahrspurmarkierungen) und eine Schwellwertschaltung 7 für negative Spitzen (rechte Ränder), an deren Ausgänge Interrupt-Eingänge eines Mikrocontrollers 8 angeschlossen sind. Weitere Interrupt-Eingänge erhalten den horizontalfrequenten Synchronimpuls H, den vertikalfrequenten Synchronimpuls V und das Signal E/O vom Sync-Separator 3. Wie später anhand der weiteren Figuren genauer beschrieben wird, erzeugt der Mikrocontroller 8 ein Warnsignal, das dem Mensch-Maschine-Interface zugeführt wird und beispielsweise auf dem Bildschirm 2 angezeigt und/oder akustisch ausgegeben wird.

Fig. 2 zeigt schematisch ein von der Videokamera 1 (Fig. 1) aufgenommenes Bild einer Fahrspur 10 mit Markierungen 11, 12. Die Auswertung im Mikrocontroller 8 erfolgt nur für drei Zeilen 13, 14, 15. Den Verlauf des Videosignals BASx einer dieser Zeilen zeigt Fig. 3a. Die Markierungen 11, 12 sind im Videosignal BASx als Signalspitzen 11' und 12' erkennbar. Eine waagerechte gestrichelte Linie 16 markiert den Schwarzpegel. Außerdem ist das horizontalfrequente Synchronsignal H erkennbar.

Das Videosignal wird differenziert, so dass je Kante der Fahrspurmarkierung im differenzierten Signal gemäß Fig. 3b ein Impuls entsteht. Positive Impulse sind Sprünge von Schwarz bzw. einem Grauwert nach Weiß, negative Impulse bedeuten Sprünge in umgekehrter Richtung. Durch die anschließenden Schwellwertschaltungen kann festgelegt werden, ab welcher Amplitude die in Fig. 3c und Fig. 3d dargestellten Impulse den Rändern einer Markierung zugeordnet und entsprechende Impulse Ip und In gebildet werden sollen.

Durch die von den Impulsen Ip und In und vom horizontalfrequenten Synchronsignal H ausgelösten Interrupts wird jeweils ein Zähler gestartet und gestoppt, der dann die Lage der Ränder der Markierungen innerhalb der jeweiligen Zeile enthält. Weicht eine Markierung zu stark vom Bildrand ab, bedeutet dies eine unzulässige Annäherung an die Markierung bzw. ein Überfahren der Markierung, so dass ein Warnsignal ausgelöst wird.

Für die Realisierung der Erfindung stehen preiswerte Komponenten auf dem Markt zur Verfügung, beispielsweise als Sync-Separator die integrierte Schaltung LM1881 der Firma National Semiconductor.

## Patentansprüche

1. Einrichtung zur Warnung des Fahrers eines Kraftfahrzeugs vor Verlassen einer Fahrspur mit einer auf die Fahrspur gerichteten Videokamera zum Aufnehmen eines Bildes, **dadurch gekennzeichnet, dass** ein mit Hilfe der Videokamera (1) erzeugtes analoges Videosignal (BAS) einem Filter (5) zuführbar ist und dass das Filter (5) im Videosignal vorhandene Signalsprünge an eine Zähleinrichtung (8) weiterleitet, welche die Lage der Signalsprünge innerhalb jeweils einer Zeile des Bildes ermittelt und bei Abweichungen der Lage der Signalsprünge von einem Sollbereich ein Warnsignal abgibt.

2. Einrichtung nach Anspruch 1, **dadurch gekennzeichnet, dass** das Filter einen Differenzierer (5) und mindestens eine Schwellwertschaltung (6, 7) umfasst.

3. Einrichtung nach einem der Ansprüche 1 oder 2, **dadurch gekennzeichnet, dass** Signalsprünge aus mehreren Zeilen des aufgenommenen Bildes berücksichtigt und die Zählergebnisse gemittelt werden.

4. Einrichtung nach einem der Ansprüche 1 bis 3, **dadurch gekennzeichnet, dass** Signalsprünge verschiedener Richtung aus benachbarten Zeilen abgeleitet werden.

5. Einrichtung nach einem der vorhergehenden Ansprüche, **dadurch gekennzeichnet, dass** die Zähleinrichtung von einem Mikrocontroller (8) gebildet ist.

6. Einrichtung nach Anspruch 5, **dadurch gekennzeichnet, dass** mindestens ein Ausgang des Filters (5) mit einem Interrupt-Eingang des Mikrocontrollers (8) verbunden ist und dass ein Sync-Separator (3) zur Ableitung von Synchronimpulsen (H, V) mit dem Videosignal beaufschlagt ist und die Synchronimpulse (H, V) dem Mikrocontroller (8) zuführt.

7. Einrichtung nach Anspruch 6, **dadurch gekennzeichnet, dass** der Sync-Separator ferner zur Erzeugung eines Halbbilder kennzeichnenden Signals (E/O) ausgebildet ist, das dem Mikrocontroller (8) zugeführt wird.

8. Einrichtung nach einem der Ansprüche 1 bis 5, **dadurch gekennzeichnet, dass** zwischen einem Ausgang der Videokamera für ein digitales Videosignal und dem Filter eine Schaltung zur Erzeugung des analogen Videosignals angeordnet ist und dass Synchronimpulse direkt aus der Videokamera zugeführt werden.

9. Einrichtung nach einem der vorhergehenden Ansprüche, **dadurch gekennzeichnet, dass** die Videokamera eine Rückfahrkamera (1) ist.

## Claims

1. Device for warning the driver of a motor vehicle before a lane is exited, by means of a video camera which is directed at the lane and has the purpose of capturing an image, **characterized in that** an analogue video signal (BAS) which is generated by means of the video camera (1) can be fed to a filter (5), and **in that** the filter (5) passes on signal jumps present in the video signal to a counting device (8) which determines the position of the signal jumps within, in each case, one line of the image and outputs a warning signal in the case of deviations of the position of the signal jumps from a reference range.

2. Device according to Claim 1, **characterized in that** the filter comprises a differentiator (5) and at least one threshold value circuit (6, 7).

3. Device according to one of Claims 1 and 2, **characterized in that** signal jumps from a plurality of lines of the captured image are taken into account and the counting results are averaged.

4. Device according to one of Claims 1 to 3, **characterized in that** signal jumps from various directions are derived from adjacent lines.

5. Device according to one of the preceding claims, **characterized in that** the counting device is formed by a microcontroller (8).

6. Device according to Claim 5, **characterized in that** at least one output of the filter (5) is connected to an interrupt input of the microcontroller (8), and **in that** the video signal is applied to a sync separator (3) in order to derive sync pulses (H, V), and said sync separator (3) feeds the sync pulses (H, V) to the microcontroller (8).

7. Device according to Claim 6, **characterized in that** the sync separator is also designed to generate a signal (I/O) which characterizes fields and which is fed to the microcontroller (8).

8. Device according to one of Claims 1 to 5, **characterized in that** a circuit for generating the analogue video signal is arranged between an output of the video camera for a digital video signal and the filter, and **in that** sync pulses are fed in directly from the video camera.

9. Device according to one of the preceding claims, **characterized in that** the video camera is a reversing camera (1).

## Revendications

1. Dispositif pour alerter un conducteur d'un véhicule automobile avant de quitter une bande de circulation, comprenant une caméra vidéo dirigée sur la bande de circulation pour enregistrer une image, **caractérisé en ce qu'**un signal vidéo analogique (BAS) généré à l'aide de la caméra vidéo (1) peut être acheminé à un filtre (5) et **en ce que** le filtre (5) transfère les sauts de signal présents dans le signal vidéo à un dispositif de comptage (8) qui détermine la position des sauts de signal à chaque fois à l'intérieur d'une ligne de l'image et délivre un signal d'alerte en cas d'écarts entre la position des sauts de signal et une plage de consigne.

2. Dispositif selon la revendication 1, **caractérisé en ce que** le filtre comprend un différentiateur (5) et au moins un circuit à valeur de seuil (6, 7).

3. Dispositif selon l'une des revendications 1 ou 2, **caractérisé en ce que** les sauts de signal issus de plusieurs lignes de l'image enregistrée sont pris en compte et la moyenne des résultats du comptage est calculée.

4. Dispositif selon l'une des revendications 1 à 3, **caractérisé en ce que** les sauts de signal dans une direction différente sont dérivés des lignes voisines.

5. Dispositif selon l'une des revendications précédentes, **caractérisé en ce que** le dispositif de comptage est constitué d'un microcontrôleur (8).

6. Dispositif selon la revendication 5, **caractérisé en ce qu'**au moins une sortie du filtre (5) est reliée avec une entrée d'interruption du microcontrôleur (8) et **en ce que** le signal vidéo est appliqué à un séparateur de synchronisation (3) pour dériver des impulsions de synchronisation (H, V) et celui-ci achemine les impulsions de synchronisation (H, V) au microcontrôleur (8).

7. Dispositif selon la revendication 6, **caractérisé en ce que** le séparateur de synchronisation (3) est en outre configuré pour la génération d'un signal (E/O) caractérisant une demi-trame, lequel est acheminé au microcontrôleur (8).

8. Dispositif selon l'une des revendications 1 à 5, **caractérisé en ce qu'**entre la sortie de la caméra vidéo pour un signal vidéo numérique et le filtre est disposé un circuit pour générer le signal vidéo analogique et **en ce que** les impulsions de synchronisation sont acheminées directement depuis la caméra vidéo.

9. Dispositif selon l'une des revendications précédentes, **caractérisé en ce que** la caméra vidéo est une caméra de marche arrière (1).
